(19) Europäisches Patentamt
European Patent Office
Office européen des brevets

(11) **EP 4 708 113 A1**

(12) **EUROPEAN PATENT APPLICATION**
published in accordance with Art. 153(4) EPC

(43) Date of publication:
**11.03.2026 Bulletin 2026/11**

(21) Application number: **25793447.1**

(22) Date of filing: **15.04.2025**

(51) International Patent Classification (IPC):
**G06F 30/20** (2020.01)

(52) Cooperative Patent Classification (CPC):
Y02T 10/62

(86) International application number:
**PCT/CN2025/088951**

(87) International publication number:
**WO 2025/223250 (30.10.2025 Gazette 2025/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.04.2024 CN 202410493246**

(71) Applicant: Chery Automobile Co., Ltd.
**Wuhu, Anhui 241006 (CN)**

(72) Inventors:
• ZHAO, Ya
**Wuhu, Anhui 241006 (CN)**
• ZHANG, Fan
**Wuhu, Anhui 241006 (CN)**
• ZHANG, Yaming
**Wuhu, Anhui 241006 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **SELF-LEARNING METHOD AND SYSTEM FOR OPTIMAL ECONOMIC CURVE OF SERIES POWER GENERATION FOR HYBRID VEHICLE MODEL**

(57) The present disclosure relates to the technical field of hybrid vehicle model power control, and provides a self-learning method and system for the optimal economic curve of series power generation for a hybrid vehicle model. The method comprises: adding a time-varying test torque to a target torque of an engine operating at an operating point on a preset optimal economic curve, so that the engine adjusts, on the basis of a final torque, a time-varying test operating point on a target equal-power line; acquiring a time-varying fuel consumption rate corresponding to the engine at the time-varying test operating point; determining a minimum value of the fuel consumption rate from the time-varying fuel consumption rate, and determining a test operating point of the engine corresponding to the minimum value; and on the basis of the test operating point corresponding to the minimum value, performing a self-learning correction on the preset optimal economic curve, so as to obtain a corrected optimal economic curve for a hybrid vehicle. The present disclosure mitigates the technical problem in the related art of the inability of a fixed optimal economic curve to guarantee optimal energy consumption.

FIG. 1

**Description**

The present disclosure claims priority to Chinese Patent Application No. 202410493246.0, filed on April 23, 2024, and entitled "METHOD AND SYSTEM FOR SELF-LEARNING OPTIMAL ECONOMIC CURVE FOR SERIES POWER GENERATION OF HYBRID ELECTRIC VEHICLE", which is incorporated herein by reference in its entirety.

**TECHNICAL FIELD**

The present disclosure relates to the field of power control for hybrid electric vehicles, and in particular, to a method and a system for self-learning an optimal economic curve for series power generation of a hybrid electric vehicle.

**BACKGROUND**

For existing series hybrid electric vehicles, a fixed optimal economic curve is fitted based on the universal characteristic curve of the engine and the efficiency distribution of each operating point of the motor in the series power generation process, and is used as the target operating point of the engine under each demand generation power in the series mode. Generally, the universal characteristics of the engine and the driving efficiency distribution of the motor will have certain deviations and changes with manufacturing dispersion and external environmental impact, so the fixed optimal economic curve cannot ensure the optimal energy consumption.

**SUMMARY**

The present disclosure provides a method and a system for self-learning an optimal economic curve for series power generation of a hybrid electric vehicle, which can solve the technical problems in the related art. The technical solutions are as follows.

In a first aspect, the present disclosure provides a method for self-learning an optimal economic curve for series power generation of a hybrid electric vehicle. The method is applicable to the hybrid electric vehicle, the hybrid electric vehicle includes a generator and an engine in a series operating condition, and the method includes: adding a time-varying test torque to a target torque of the engine operating at an operating point on a preset optimal economic curve, such that the engine adjusts, based on a final torque, a time-varying test operating point on a target constant power line, wherein the final torque is calculated based on the target torque and the test torque, the test operating point includes the final torque and an engine speed at the final torque, and the target constant power line is a curve of a torque of the engine varying with the engine speed in the case that the generator operates at a target generation power; acquiring a time-varying fuel consumption rate of the engine at the time-varying test operating point; determining a minimum value of the time-varying fuel consumption rate, and determining a test operating point of the engine corresponding to the minimum value; and performing, based on the test operating point corresponding to the minimum value, self-learning correction on the preset optimal economic curve to obtain a corrected optimal economic curve of the hybrid electric vehicle.

In some embodiments, a variation range of the test torque is between a first torque and a second torque; and the first torque is less than the second torque.

In some embodiments, a time-varying manner of the test torque includes: increasing from 0 to the second torque at a preset change rate, then decreasing from the second torque to the first torque at the preset change rate, and finally increasing from the first torque to 0 at the preset change rate.

In some embodiments, the first torque is -10 Nm, and the second torque is 10 Nm.

In some embodiments, the final torque and the engine speed at the final torque satisfy the following equation:

$$\mathrm{EngSpd} = 9550 \times \mathrm{P/Tq};$$

wherein Tq is the final torque, P is the target generation power, and EngSpd is the engine speed at the final torque.

In a second aspect, the present disclosure provides a system for self-learning an optimal economic curve for series power generation of a hybrid electric vehicle. The system is applicable to the hybrid electric vehicle, the hybrid electric vehicle includes a generator and an engine in a series operating condition, and the system includes: a test module, an acquisition module, a determination module, and a learning module, wherein the test module is configured to add a time-varying test torque to a target torque of the engine operating at an operating point on a preset optimal economic curve, such that the engine adjusts, based on a final torque, a time-varying test operating point on a target constant power line, wherein the final torque is calculated based on the target torque and the test torque, the test operating point includes the final torque and an engine speed at the final torque, and the target constant power line is a curve of a torque of the engine varying with the engine speed in the case that the generator operates at a target generation power; the acquisition module is configured to acquire a time-varying fuel consumption rate of the engine at the time-varying test operating point; the determination module is configured to determine a minimum value of the time-varying fuel consumption rate, and determine a test operating point of the engine corresponding to the minimum value; and the learning module is configured to perform, based on the test operating point corresponding to the minimum value, self-learning correction on the preset optimal economic curve to obtain a corrected optimal economic curve of the hybrid electric vehicle.

In some embodiments, a variation range of the test torque is between a first torque and a second torque; and the first torque is less than the second torque.

In some embodiments, a time-varying manner of the test torque includes: increasing from 0 to the second torque at a preset change rate, then decreasing from the second torque to the first torque at the preset change rate, and finally increasing from the first torque to 0 at the preset change rate.

In some embodiments, the first torque is -10 Nm, and the second torque is 10 Nm.

In some embodiments, the final torque and the engine speed at the final torque satisfy the following equation:

$$EngSpd = 9550 \times P/Tq;$$

wherein Tq is the final torque, P is the target generation power, and EngSpd is the engine speed at the final torque.

The technical solutions according to the present disclosure at least achieve the following beneficial effects.

The present disclosure provides a method and a system for self-learning an optimal economic curve for series power generation of a hybrid electric vehicle. By increasing the test torque on the engine, the whole vehicle can operate on the corrected optimal economic curve at the operating point of each generation power, which alleviates the problems of dispersion of the universal characteristics of the engine and dispersion of the efficiency distribution of the motor, and also alleviates the technical problem in the related art that the fixed optimal economic curve cannot ensure the optimal energy consumption.

It should be understood that both the foregoing general description and the following detailed description are exemplary and explanatory only and are not construed as limiting the present disclosure.

## BRIEF DESCRIPTION OF DRAWINGS

In order to more clearly illustrate the technical solutions in the embodiments of the present disclosure, the accompanying drawings required to be used in the description of the embodiments are briefly introduced below. It is apparent that the accompanying drawings in the following description show merely some embodiments of the present disclosure, and for those of ordinary skill in the art, other accompanying drawings may be derived from these accompanying drawings without creative efforts.

FIG. 1 is a flowchart of a method for self-learning an optimal economic curve for series power generation of a hybrid electric vehicle according to some embodiments of the present disclosure;

FIG. 2 is a schematic diagram of a curve of a test torque varying over time according to some embodiments of the present disclosure;

FIG. 3 is a schematic diagram of correction of a preset optimal economic curve according to some embodiments of the present disclosure; and

FIG. 4 is a schematic diagram of a system for self-learning an optimal economic curve for series power generation of a hybrid electric vehicle according to some embodiments of the present disclosure.

## DETAILED DESCRIPTION

The present disclosure will be described in detail below with reference to the accompanying drawings in conjunction with embodiments. It should be noted that the embodiments and features of the embodiments in the present disclosure may be combined with each other without conflict.

The following detailed description is exemplary and is intended to provide further details of the present disclosure. Unless otherwise specified, all technical terms used herein have the same meaning as commonly understood by those of ordinary skill in the art to which the present disclosure belongs. The terms used herein are solely for the purpose of describing specific embodiments and are not intended to limit the exemplary embodiments according to the present disclosure.

First Embodiment

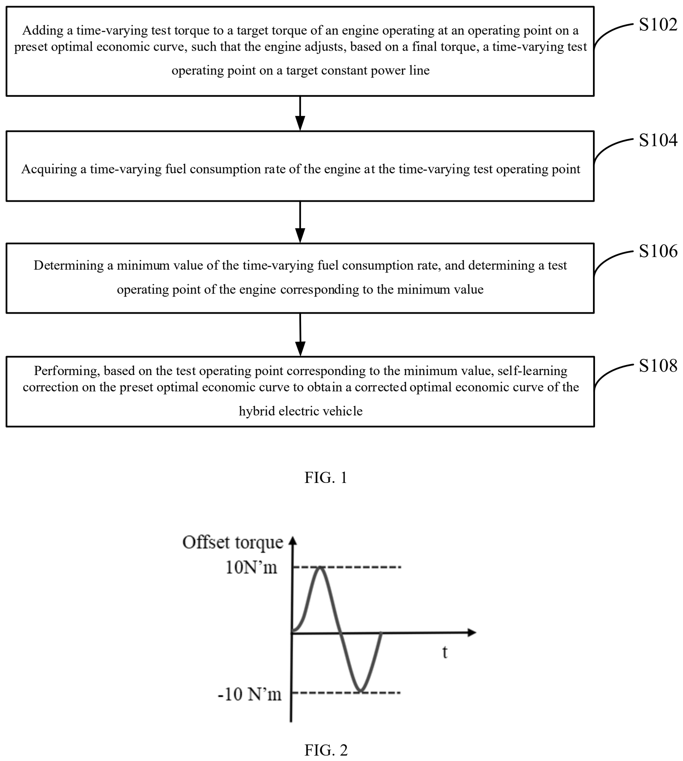

FIG. 1 is a flowchart of a method for self-learning an optimal economic curve for series power generation of a hybrid electric vehicle according to some embodiments of the present disclosure. The method is applicable to the hybrid electric vehicle, and the hybrid electric vehicle includes a generator and an engine in a series operating condition. As shown in FIG. 1, the method includes the following steps.

In S102, a time-varying test torque is added to a target torque of the engine operating at an operating point on a preset optimal economic curve, such that the engine adjusts, based on a final torque, a time-varying test operating point on a target constant power line, wherein the final torque is calculated based on the target torque and the test torque, the test operating point includes the final torque and an engine speed at the final torque, and the target constant power line is a curve of a torque of the engine varying with the engine speed in the case that the generator operates at a target generation power.

During implementation, in the case that the engine operates at the operating point on the preset optimal economic curve, the test torque is added based on the current target torque, and the final torque is determined based on the test torque and the target torque.

Since the target generation power of the generator remains unchanged, the engine speed at the final torque is determined, based on the final torque, on the target constant power line corresponding to the target generation power, and then the engine is controlled to operate at the final torque and the engine speed at the final torque.

It should be understood that the test torque is a torque that varies over time. Therefore, in a period of time after the test torque is added, the final torque varies with the test torque, and the engine speed at the final torque also varies with the test torque, to obtain the time-varying test operating point.

In S104, a time-varying fuel consumption rate of the engine is acquired at the time-varying test operating point.

During implementation, in the case that the engine operates at the time-varying test operating point, the time-varying fuel consumption rate is acquired. The time-varying fuel consumption rate includes fuel consumption rates corresponding to the respective test operating points; that is, different final torques and the engine speeds at the different final torques correspond to the different fuel consumption rates.

In S106, a minimum value of the time-varying fuel consumption rate is determined, and a test operating point of the engine corresponding to the minimum value is determined.

During implementation, the minimum value of all the fuel consumption rates corresponding to the test operating points is determined, and then a test operating point corresponding to the minimum value is determined; that is, a final torque and an engine speed corresponding to the minimum value are determined.

In S108, self-learning correction is performed, based on the test operating point corresponding to the minimum value, on the preset optimal economic curve to obtain a corrected optimal economic curve of the hybrid electric vehicle.

During implementation, after the test operating point corresponding to the minimum value is determined, the operating point at the target constant power line in the preset optimal economic curve is corrected to be the test operating point, so as to obtain the corrected optimal economic curve.

In the above manner, during the operation of the vehicle, the current optimal economic curve is corrected in real time, such that the optimal economic curve can be kept in the state of optimal energy consumption all along on the basis of the actual situation.

In some embodiments of the present disclosure, a variation range of the test torque is between a first torque and a second torque; and the first torque is less than the second torque.

In some embodiments, a manner in which the test torque varies over time includes: increasing from 0 to the second torque at a preset change rate, then decreasing from the second torque to the first torque at the preset change rate, and finally increasing from the first torque to 0 at the preset change rate.

In some embodiments, the first torque is -10 Nm, and the second torque is 10 Nm.

FIG. 2 is a schematic diagram of a curve of a test torque varying over time according to some embodiments of the present disclosure. As shown in FIG. 2, a variation range of the test torque is ± 10 Nm.

During implementation, the preset change rate is a rate at which a value varies over time or a rate at which a value remains unchanged in the entire time period corresponding to the test torque. The embodiments of the present disclosure are not limited thereto.

In the case that the preset change rate is a rate at which a value varies over time, the preset change rate includes a rate of change over time. Referring to FIG. 2, FIG. 2 shows that the rate of change of the test torque is a rate of change over time.

Specifically, in the case that the whole hybrid electric vehicle runs stably in the series operating condition, the high and low voltage power supply load of the whole vehicle does not change greatly, the real-time battery current is stable, the engine state is stable, no diagnosis and other factors affect the fuel economy, and the water temperature of the engine is stable. In the above scenario, it is ensured that other apparatuses in the hybrid electric vehicle do not interfere with the self-learning of the optimal economic curve, thereby improving the accuracy of the self-learning of the optimal economic curve.

The specific operation is as follows: the engine operates at an operating point on the original optimal economic curve (i.e., the above preset optimal economic curve), and at this time, a slowly varying torque (about ± 10 Nm) is added to the target torque of the engine, as shown in FIG. 2. The target engine speed is calculated based on the current demand generation power and the final target torque of the engine, so as to ensure that the generation power of the generator remains unchanged.

Specifically, the final torque and the engine speed at the final torque satisfy the following equation:

$$\text{EngSpd} = 9550 \times \text{P/Tq};$$

wherein Tq is the final torque, P is the target generation power, and EngSpd is the engine speed at the final torque.

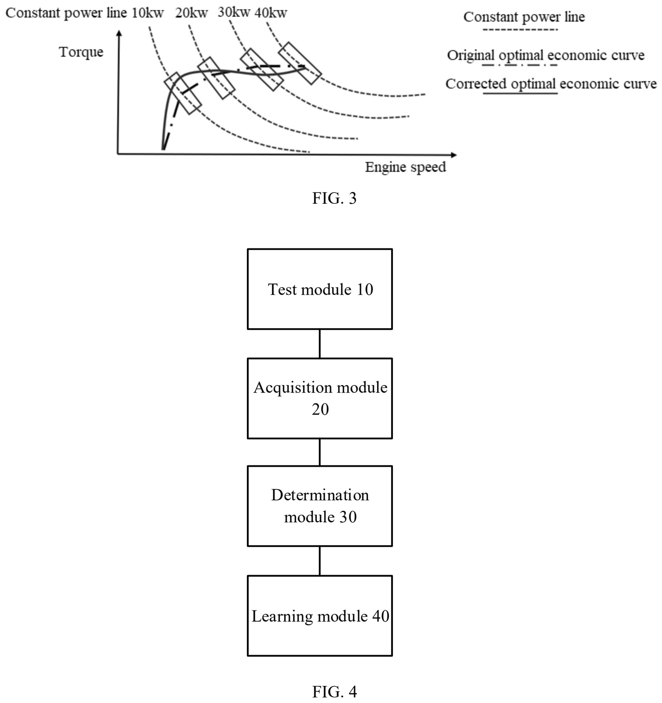

FIG. 3 is a schematic diagram of correction of a preset optimal economic curve according to some embodiments of the present disclosure. As shown in FIG. 3, the operating point of the engine moves in the vicinity of the original optimal economic curve along the constant power line as torque of the engine varies. As shown in the block area of FIG. 3, the fuel consumption rate produced by the engine in real time is searched and compared, and the operating point of the engine (the torque and the engine speed) at the minimum value of the fuel consumption rate is recorded and stored as the operating point of the engine during the next operation of the whole vehicle at the same generation power. In the case that the optimal economic curve under each generation power is subjected to correction learning, the optimal economic curve as shown by the solid line in FIG. 3 is formed.

As can be seen from the above description, the embodiments of the present disclosure provide a method for self-learning an optimal economic curve for series power generation of a hybrid electric vehicle. By increasing the test torque on the engine, the whole vehicle can operate on the corrected optimal economic curve at the operating point of each generation power, which alleviates the problems of dispersion of the universal characteristics of the engine and dispersion of the efficiency distribution of the motor, and also alleviates the technical problem in the related art that the fixed optimal economic curve cannot ensure the optimal energy consumption.

Second Embodiment

FIG. 4 is a schematic diagram of a system for self-learning an optimal economic curve for series power generation of a hybrid electric vehicle according to some embodiments of the present disclosure. The system is applicable to the hybrid electric vehicle, and the hybrid electric vehicle includes a generator and an engine in a series operating condition. As shown in FIG. 4, the system includes a test module 10, an acquisition module 20, a determination module 30, and a learning module 40.

Specifically, the test module 10 is configured to add a time-varying test torque to a target torque of the engine operating at an operating point on a preset optimal economic curve, such that the engine adjusts, based on a final torque, a time-varying test operating point on a target constant power line, wherein the final torque is calculated based on the target torque and the test torque, the test operating point includes the final torque and an engine speed at the final torque, and the target constant power line is a curve of a torque of the engine varying with the engine speed in the case that the generator operates at a target generation power.

The acquisition module 20 is configured to acquire a time-varying fuel consumption rate of the engine at the time-varying test operating point.

The determination module 30 is configured to determine a minimum value of the time-varying fuel consumption rate, and determine a test operating point of the engine corresponding to the minimum value.

The learning module 40 is configured to perform, based on the test operating point corresponding to the minimum value, self-learning correction on the preset optimal economic curve to obtain a corrected optimal economic curve of the hybrid electric vehicle.

In some embodiments, a variation range of the test torque is between a first torque and a second torque; and the first torque is less than the second torque.

In some embodiments, a time-varying manner of the test torque includes: increasing from 0 to the second torque at a preset change rate, then decreasing from the second torque to the first torque at the preset change rate, and finally increasing from the first torque to 0 at the preset change rate.

In some embodiments, the first torque is -10 Nm, and the second torque is 10 Nm.

In some embodiments, the final torque and the engine speed at the final torque satisfy the following equation:

$$EngSpd = 9550 \times P/Tq;$$

wherein Tq is the final torque, P is the target generation power, and EngSpd is the engine speed at the final torque.

From the common technical knowledge, the present disclosure can be achieved by other embodiments without departing from its spirit or essential characteristics. Accordingly, the disclosed embodiments are to be considered in all respects only as illustrative and not exclusive. All changes that come within the scope or that are equivalent to the present disclosure are intended to be embraced by the present disclosure.

Those skilled in the art should understand that the embodiments of the present disclosure may be provided as a method, a system, or a computer program product. Accordingly, the embodiments of the present disclosure may take the form of an entire hardware embodiment, an entire software embodiment, or an embodiment combining software and hardware aspects. Furthermore, the present disclosure may take the form of a computer program product implemented on one or more computer-available storage media (including, but not limited to, a disk memory, a CD-ROM, an optical memory, and the like) containing computer-available program codes therein.

The present disclosure is described with reference to flowcharts and/or block diagrams of the method, the device (system), and the computer program product according to the embodiments of the present disclosure. It should be understood that each flow and/or block in the flowcharts and/or the block diagrams and a combination of the flows and/or the blocks in the flowcharts and/or the block diagrams may be implemented by computer program instructions. These computer program instructions may be provided for a general-purpose computer, a special-purpose computer, an embedded processor, or processors of other programmable data processing devices to generate a machine, such that an apparatus for achieving functions designated in one or more flows of the flowcharts and/or one or more blocks of the block diagrams is generated based on instructions executed by the computers or the processors of the other programmable data processing devices.

These computer program instructions may also be stored in a computer-readable memory capable of guiding the computers or the other programmable data processing devices to operate in a specific mode, such that a manufactured product including an instruction apparatus is generated based on the instructions stored in the computer-readable memory, and the instruction apparatus achieves the functions designated in one or more flows of the flowcharts and/or one or more blocks of the block diagrams.

These computer program instructions may also be loaded onto the computers or the other programmable data processing devices, such that processing implemented by the computers is generated by executing a series of operation steps on the computers or the other programmable devices, and therefore the instructions executed on the computers or the other programmable devices provide a step of achieving the functions designated in one or more flows of the flowcharts and/or one or more blocks of the block diagrams.

Finally, it should be noted that the above embodiments are only used to illustrate the technical solutions of the present disclosure and not to limit them. Although the present disclosure has been described in detail with reference to the above embodiments, those of ordinary skill in the art should understand that modifications or equivalent substitutions can still be made to the specific embodiments of the present disclosure without departing from the spirit and scope of the present disclosure, and these modifications or equivalent substitutions shall all fall within the scope of protection of the claims of the present disclosure.

**Claims**

1. A method for self-learning an optimal economic curve for series power generation of a hybrid electric vehicle, applicable to the hybrid electric vehicle, wherein the hybrid electric vehicle comprises a generator and an engine in a series operating condition, and the method comprises:

   adding a time-varying test torque to a target torque of the engine operating at an operating point on a preset optimal economic curve, such that the engine adjusts, based on a final torque, a time-varying test operating point on a target constant power line, wherein the final torque is calculated based on the target torque and the test torque, the test operating point comprises the final torque and an engine speed at the final torque, and the target constant power line is a curve of a torque of the engine varying with the engine speed in a case that the generator operates at a target generation power;
   acquiring a time-varying fuel consumption rate of the engine at the time-varying test operating point;
   determining a minimum value of the time-varying fuel consumption rate, and determining a test operating point of the engine corresponding to the minimum value; and
   performing, based on the test operating point corresponding to the minimum value, self-learning correction on the preset optimal economic curve to obtain a corrected optimal economic curve of the hybrid electric vehicle.

2. The method according to claim 1, wherein a variation range of the test torque is between a first torque and a second torque, the first torque being less than the second torque.

3. The method according to claim 2, wherein a time-varying manner of the test torque comprises: increasing from 0 to the second torque at a preset change rate, then decreasing from the second torque to the first torque at the preset change rate, and finally increasing from the first torque to 0 at the preset change rate.

4. The method according to claim 2 or 3, wherein the first torque is -10 Nm, and the second torque is 10 Nm.

5. The method according to claim 1, wherein the final torque and the engine speed at the final

$$EngSpd = 9550 \times P/Tq;$$

torque satisfy: wherein Tq is the final torque, P is the target generation power, and EngSpd is the engine speed at the final torque.

6. A system for self-learning an optimal economic curve for series power generation of a hybrid electric vehicle, applicable to the hybrid electric vehicle, wherein the hybrid electric vehicle comprises a generator and an engine in a series operating condition, and the system comprises: a test module, an acquisition module, a determination module, and a learning module, wherein

   the test module is configured to add a time-varying test torque to a target torque of the engine operating at an operating point on a preset optimal economic curve, such that the engine adjusts, based on a final torque, a time-varying test operating point on a target constant power line, wherein the final torque is calculated based on the target torque and the test torque, the test operating point comprises the final torque and an engine speed at the final torque, and the target constant power line is a curve of a torque of the engine varying with the engine speed in a case that the generator operates at a target generation power;

the acquisition module is configured to acquire a time-varying fuel consumption rate of the engine at the time-varying test operating point;

the determination module is configured to determine a minimum value of the time-varying fuel consumption rate, and determine a test operating point of the engine corresponding to the minimum value; and

the learning module is configured to perform, based on the test operating point corresponding to the minimum value, self-learning correction on the preset optimal economic curve to obtain a corrected optimal economic curve of the hybrid electric vehicle.

7.  The system according to claim 6, wherein a variation range of the test torque is between a first torque and a second torque, the first torque being less than the second torque.

8.  The system according to claim 7, wherein a time-varying manner of the test torque comprises: increasing from 0 to the second torque at a preset change rate, then decreasing from the second torque to the first torque at the preset change rate, and finally increasing from the first torque to 0 at the preset change rate.

9.  The system according to claim 7 or 8, wherein the first torque is -10 Nm, and the second torque is 10 Nm.

10. The system according to claim 6, wherein the final torque and the engine speed at the final torque satisfy:

$$EngSpd = 9550 \times P/Tq;$$

wherein Tq is the final torque, P is the target generation power, and EngSpd is the engine speed at the final torque.

Adding a time-varying test torque to a target torque of an engine operating at an operating point on a preset optimal economic curve, such that the engine adjusts, based on a final torque, a time-varying test operating point on a target constant power line ⟋ S102

Acquiring a time-varying fuel consumption rate of the engine at the time-varying test operating point ⟋ S104

Determining a minimum value of the time-varying fuel consumption rate, and determining a test operating point of the engine corresponding to the minimum value ⟋ S106

Performing, based on the test operating point corresponding to the minimum value, self-learning correction on the preset optimal economic curve to obtain a corrected optimal economic curve of the hybrid electric vehicle ⟋ S108

FIG. 1

FIG. 2

Constant power line 10kw  20kw  30kw 40kw

Torque

Constant power line
-------------

Original optimal economic curve — · — · —

Corrected optimal economic curve ———

Engine speed

FIG. 3

Test module 10

Acquisition module 20

Determination module 30

Learning module 40

FIG. 4

## INTERNATIONAL SEARCH REPORT

| International application No. |
| --- |
| **PCT/CN2025/088951** |

**A. CLASSIFICATION OF SUBJECT MATTER**

G06F30/20(2020.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, DWPI, VEN, USTXT, EPTXT, WOTXT, IEEE, CNKI, 必应, BING, 百度, BAIDU: 混合动力车, 最佳, 经济, 曲线, 燃油消耗率, 修正, 扭矩, 转速, 功率, 测试, hybrid vehicle, optimal, economic, curve, fuel consumption rate, correct, torque, speed, power, test

**C. DOCUMENTS CONSIDERED TO BE RELEVANT**

| Category* | Citation of document, with indication, where appropriate, of the relevant passages | Relevant to claim No. |
| --- | --- | --- |
| PX | CN 118395694 A (CHERY AUTOMOBILE CO., LTD.) 26 July 2024 (2024-07-26) claims 1-10 | 1-10 |
| Y | CN 101262162 A (GUILIN JIXING ELECTRONIC ISOEQUILIBRIUM POWER CO., LTD.) 10 September 2008 (2008-09-10) description, page 4, paragraph 5 to page 8, paragraph 3, and figures 2-3 | 1-10 |
| Y | CN 117184033 A (SHENYANG UNIVERSITY OF TECHNOLOGY) 08 December 2023 (2023-12-08) description, paragraphs 30-38, and figure 4 | 1-10 |
| Y | CN 201018382 Y (GUILIN JIXING ELECTRONIC ISOEQUILIBRIUM POWER CO., LTD.) 06 February 2008 (2008-02-06) description, page 4, paragraph 2 to page 5, paragraph 6, and figure 2 | 1-10 |
| A | US 2017088118 A1 (FERRARI S.P.A) 30 March 2017 (2017-03-30) entire document | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 July 2025** | **24 July 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/088951**

| Patent document cited in search report | | | Publication date (day/month/year) | Patent family member(s) | | | Publication date (day/month/year) |
|---|---|---|---|---|---|---|---|
| CN | 118395694 | A | 26 July 2024 | None | | | |
| CN | 101262162 | A | 10 September 2008 | WO | 2008104107 | A1 | 04 September 2008 |
| | | | | CN | 101479143 | A | 08 July 2009 |
| | | | | DE | 112007003371 | T5 | 07 January 2010 |
| | | | | US | 2010100292 | A1 | 22 April 2010 |
| | | | | JP | 2010520393 | W | 10 June 2010 |
| | | | | RU | 2009132423 | A | 10 March 2011 |
| | | | | CN | 101262162 | B | 06 April 2011 |
| | | | | CN | 101479143 | B | 25 April 2012 |
| | | | | HK | 1134920 | A1 | 15 February 2013 |
| CN | 117184033 | A | 08 December 2023 | None | | | |
| CN | 201018382 | Y | 06 February 2008 | None | | | |
| US | 2017088118 | A1 | 30 March 2017 | US | 10308236 | B2 | 04 June 2019 |
| | | | | EP | 3138751 | A1 | 08 March 2017 |
| | | | | EP | 3138751 | B1 | 27 September 2017 |
| | | | | ITUB | 20153426 | A1 | 04 March 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410493246